# EUROPÄISCHE PATENTANMELDUNG

(11) **EP 1 571 418 A2**
(43) Veröffentlichungstag der Anmeldung: **07.09.2005**
(21) Anmeldenummer: 05100244.2
(22) Anmeldetag: 17.01.2005
(51) Int. Cl.: G01C 21/26, G08G 1/09

(54) **Navigationssystem mit einem Empfänger für Verkehrsmeldungen und Verfahren zum Übertragen von Verkehrsmeldungen**

(30) Priorität: 04.03.2004 DE 102004010510
(71) Anmelder: ROBERT BOSCH GMBH, 70442 Stuttgart (DE)
(72) Erfinder: Eschke, Bernd, 31162, Bad Salzdetfurth (DE)

(57) **Zusammenfassung**

Um ein Navigationssystem mit einem Arbeitsspeicher zum Einlesen von Daten des momentan befahrenen Gebiets aus einem Datenspeicher mit einem Empfänger zum Empfang von Verkehrsmeldungen zu schaffen, wobei die Verkehrsmeldungen in einem Speicher speicherbar und zur Berücksichtigung bei der Navigationszielführung in den Arbeitsspeicher einlesbar sind, bei dem der Arbeitsspeicher eine möglichst geringe Größe aufweist, wird vorgeschlagen, dass dem Speicher für Verkehrsmeldungen eine Filtereinrichtung zur Ermittlung derjenigen Verkehrsmeldungen für das momentan befahrene Gebiet anhand eines den Verkehrsmeldungen hinzugefügten Sortierkriteriums (13) zugeordnet ist. Weiterhin wird ein Verfahren zum Übertragen von Verkehrsmeldungen in Datenblöcken (10) angegeben.

## Beschreibung

### Technisches Gebiet

Die Erfmdung betrifft ein Navigationssystem mit einem Arbeitsspeicher zum Einlesen von Daten des momentan befahrenen Gebiets aus einem Datenspeicher und mit einem Empfänger zum Empfang von Verkehrsmeldungen wobei die Verkehrsmeldungen in einem Speicher speicherbar und zur Berücksichtigung bei der Navigationszielführung in den Arbeitsspeicher einlesbar sind sowie auf ein Verfahren zum Übertragen von Verkehrsmeldungen in Datenblöcken, die aus Datensätzen zusammengesetzt sind wobei die Datensätze wiederum Datenfelder enthalten.

### Stand der Technik

Navigationssysteme können eine Fahrtroute von einem Ausgangspunkt beispielsweise der momentanen Position des Kraftfahrzeugs, das mit dem Navigationssystem ausgestattet ist, zu einem vom Nutzer eingegebenen Zielort errechnen und durch Ausgabe von optischen und/oder akustischen Richtungshinweisen den Nutzer auf der ermittelten Fahrtroute zum Zielort leiten. Dabei können weitere Eingaben bzw. Parameter wie beispielsweise von der Routenwahl ausgeschlossene Straßenarten oder fahrzeugspezifische Größen bei der Ermittlung einer Fahrtroute berücksichtigt werden. Die Daten bezüglich der Straßen- und Verkehrsverbindungen sind üblicherweise in einem austauschbaren Datenspeicher wie einer CD-Rom oder einer DVD gespeichert, wobei das Navigationssystem auf diese Daten beispielsweise über ein Lesegerät zugreifen kann. Die ermittelte Fahrtroute wird in einem Routenspeicher abgelegt und die tatsächliche Position des Kraftfahrzeugs mit einer Positionsbestimmungseinheit wie beispielsweise einem GPS-Empfänger bestimmt und mit der vorausberechneten Fahrtroute in einer Navigationszielführung verglichen und entsprechende Richtungshinweise an den Nutzer ausgegeben.

Hierfür werden die Daten des Kartenausschnitts des momentan befahrenen Gebiets bezüglich des Strecken- und Wegenetzes aus dem Datenspeicher ausgelesen und in einem Arbeitsspeicher des Navigationssystems abgelegt, um die Menge der zu verarbeitenden Daten gering zu halten. Wird das Gebiet, dessen Daten im Arbeitsspeicher enthalten sind, verlassen wird der Speicher gelöscht und die Daten des daran anschließenden Gebiets in diesen eingelesen.

Es sind Navigationssysteme bekannt, die in der Lage sind, Verkehrsmeldungen, die von Rundfunksendern ausgestrahlt werden, bei ihrer Navigationszielführung zu berücksichtigen. Hierfür werden die Verkehrsmeldungen in codierter Form ausgestrahlt, wobei die Navigationssysteme dafür ausgelegt sind, diese Meldungen zu entschlüsseln und bei der Navigationszielführung zu berücksichtigen. Somit ist es möglich, einen kurzfristig auftretenden Verkehrsstau, der in den Verkehrsmeldungen gemeldet wird, zu berücksichtigen, um eine alternative Fahrtroute auszuarbeiten und dem Nutzer anzuzeigen, damit der Stau umfahren werden kann.

Die DE 35 36 820 A1 beschreibt einen Verkehrsfunk-Decoder für empfangene Verkehrshinweise, die beispielsweise nach dem RDS-System (Radio-Data-System) übertragen werden. Hierbei sind die empfangenen und vorzugsweise digitalen Signale Adresssignale, um aus einem Verkehrshinweisspeicher im Verkehrsfunkdecoder die unter den jeweiligen Adressen gespeicherten Standardhinweise in Schriftform oder Sprache abzurufen.

Die EP 0 263 332 A1 offenbart einen Empfänger zum Empfang von Rundfunksendungen mit einem Speicher zur Wandlung der digitalen Signale in ausgabefähige Kennzeichnungen. Dabei ist der Speicher in straßenorientierte Segmente aufgeteilt, die wiederum in Streckensegmente gegliedert sind. Durch die Übermittlung der digitalen Signale werden die betroffenen Streckensegmente, auf denen beispielsweise ein Stau aufgetreten ist, aus einem Speicher ausgelesen und dem Nutzer angezeigt.

Die EP 0 756 260 A1 beschreibt einen Rundfunkempfänger mit einer Steuerschaltung, bei dem mehrfach wiederkehrende Verkehrshinweise durch einen Ersetzungscode codiert sind. Es werden lediglich Ersatzworte übertragen bzw. vom Rundfunkempfänger empfangen, der anhand der Ersatzworte die entsprechenden Verkehrshinweise und Ortsangaben aus einem Speicher ausliest und dem Nutzer anzeigt. Die Ersatzworte sind Adressen oder Zeiger und verweisen auf einen Speicherplatz im Rundfunkempfänger, an dem der tatsächliche Begriff steht.

Als nachteilig hierbei ist anzusehen, dass in dem Radioempfänger bzw. dem Navigationssystem, das die Verkehrsmeldungen verarbeitet, stets ein großer Speicher notwendig ist, um sämtliche codierten Verkehrsmeldungen oder Ortsangaben zu speichern, die lediglich durch Übermittlung entsprechender Codes oder Ersatzworte abgerufen werden. Weiterhin ist es nachteilig, dass alle Verkehrsmeldungen in einem eigenen Speicher abgespeichert werden und zur Berücksichtigung bei der Navigationszielführung in den Arbeitsspeicher für die Daten des momentan befahrenen Gebiets eingelesen werden. Dies erfordert jedoch einen erheblich vergrößerten Arbeitsspeicher, falls sämtliche empfangenen Verkehrsmeldungen in diesen eingelesen werden sollen und beispielsweise bei einer länderübergreifenden Straßenkarte, die vom Datenspeicher in den Arbeitsspeicher eingelesen wird, aufgrund der Vielzahl der gespeicherten Dateninformationen eine erhebliche Datenmenge anfällt.

Ausgehend von diesem Stand der Technik liegt der Erfindung die Aufgabe zugrunde, ein Navigationssystem mit einem Arbeitsspeicher zu schaffen, bei dem der Arbeitsspeicher eine minimale Kapazität aufweist. Weiterhin soll ein Verfahren zum Übertragen von Verkehrsmeldungen angegeben werden, das es ermöglicht, den notwendigen Arbeitsspeicher in Navigationssystemen zur Verarbeitung der Verkehrsmeldungen so klein wie möglich zu halten.

Diese Aufgaben werden jeweils durch die in den Ansprüchen 1 und 3 angegebenen Merkmale gelöst.

Der Kerngedanke der Erfindung besteht darin, dass dem Speicher für Verkehrsmeldungen, in dem sämtliche empfangenen Verkehrsmeldungen in codierter Form gespeichert sind, eine zusätzliche Filtereinrichtung zugeordnet ist, die die empfangenen Verkehrsmeldungen daraufhin überprüft, ob sie dem momentan von dem Kraftfahrzeug befahrenen Gebiet zugehörig bzw. für dieses Gebiet relevant sind. Häufig werden bei den im Rundfunk übertragenen Verkehrsmeldungen beispielsweise Staus oder Behinderungen in mehreren Bundesländern gemeldet, wobei die Staus im Extremfall mehrere Hundert Kilometer auseinander liegen können. Es ist offensichtlich, dass nicht alle diese Verkehrsmeldungen für das momentan befahrene Gebiet relevant sind sondern nur diejenigen Staus oder Behinderungen, die auf der vom Navigationssystem ermittelten Fahrtroute liegen. Weiterhin sind auch nur diejenigen Verkehrsmeldungen relevant, die einen aktuellen Bezug zu der Fahrtroute haben. Das bedeutet, dass Verkehrsmeldungen in weit entfernten Gebieten, die beispielsweise erst in einigen Stunden befahren werden sollen, jetzt nicht relevant sind, da sich diese Staus bis zum Erreichen dieses Gebiets bereits aufgelöst haben können. Mit der Filtereinrichtung werden die empfangenen und im Speicher gespeicherten Verkehrsmeldungen auf ihre Relevanz hin überprüft und nur diejenigen in den Arbeitsspeicher zur Berücksichtigung bei der Navigationszielführung übertragen bzw. eingelesen, die auch tatsächlich relevant sind. Dabei kann das Überprüfen der Verkehrsmeldungen in beliebiger Weise nach zeitlichen und/oder räumlichen Kriterien erfolgen. Beispielsweise können die Verkehrsmeldungen von der Filtereinrichtung, die hard- und/oder softwaremäßig im Navigationssystem implementiert ist, auf ihre räumliche Zuordnung hin überprüft werden. Hierzu ist wie im Folgenden beschrieben jeder Verkehrsmeldung als Hinweis auf ihre räumliche Zuordnung bzw. ihre räumliche Relevanz ein Sortierkriterium hinzugefügt. Von der Filtereinrichtung werden die Verkehrsmeldungen auf das Sortierkriterium hin überprüft und nur diejenigen Verkehrsmeldungen in den Arbeitsspeicher übertragen bzw. freigegeben, die für das befahrene Gebiet von Belang sind.

Der Vorteil dieses Navigationssystems besteht darin, dass die Größe des erforderlichen Arbeitsspeichers im Navigationssystem verringert werden kann, da nicht mehr sämtliche anfallenden Verkehrsmeldungen in diesen eingelesen werden müssen. Dies ist mit einer erheblichen Kostenersparnis verbunden.

Hierfür werden die Verkehrsmeldungen in Datenblöcken übertragen, die aus Datensätzen zusammengesetzt sind, die wiederum Datenfelder enthalten. Zur räumlichen und/oder zeitlichen Sortierung der Verkehrsmeldungen werden den Verkehrsmeldungen bzw. den Datenblöcken Daten zur räumlichen Sortierung zugeordnet. Beispielsweise kann den Verkehrsmeldungen ein Hinweis für das Element einer defmierten Masche bzw. eines Planquadrats einer digitalen Karte, die Grundlage für die Verkehrsmeldungen ist, zugeordnet sein. Es versteht sich, dass das Navigationssystem zur Erarbeitung einer Fahrtroute auf die gleiche digitale Karte zurückgreift. Ebenso ist es möglich, dass den Verkehrsmeldungen eine Information bezüglich ihrer zeitlichen Relevanz zugeordnet ist. Das bedeutet, dass beispielsweise eine Sperrung eines Streckenabschnitts erst später erfolgt und in den hinzugefügten Daten beziehungsweise dem Sortierkriterium dieser Zeitraum enthalten ist, zu dem diese Information bei der Navigationszielführung berücksichtigt werden muss. Diese hinzugefügten Daten werden von einer vorstehend beschriebenen Filtereinrichtung dazu verwendet, nur die relevanten Verkehrsmeldungen in den Arbeitsspeicher zu übertragen.

Hierdurch wird ein Datensatz definiert, der es gestattet, aus allen Verkehrsmeldungen nur die tatsächlich relevanten herauszufiltern, wobei aus den im Speicher vorhandenen Datenblöcken beliebig anders konfigurierte Datenblöcke erstellt werden können.

Vorteilhafte Ausgestaltungen der Erfindung sind jeweils in den Unteransprüchen gekennzeichnet.

Gemäß der Ausgestaltung in Anspruch 2 ist der Speicher für Verkehrsmeldungen ein TMC-Speicher. Bei dem dem Fachmann bekannten TMC-System (Traffic Message Channel) handelt es sich um einen kostenlosen Service der Radiosender, mit dem codierte Verkehrsinformationen zur Berücksichtigung alternativer Fahrtrouten durch entsprechend ausgestattete Navigationssysteme übertragen werden. Die nach dem TMC-Standard codierten Verkehrsmeldungen werden in einem entsprechend konfigurierten Speicher im Navigationssystem abgelegt und im Stand der Technik alle in den Arbeitsspeicher zur Navigationszielführung eingelesen. Durch die zusätzliche Übertragung von Daten bezüglich der räumlichen Zuordnung, wie vorstehend beschrieben, können von der Filtereinrichtung diejenigen Verkehrsmeldungen herausgefiltert werden, die tatsächlich für das momentan befahrene Gebiet relevant sind.

In einfacher Weise können die Daten zur räumlichen und/oder zeitlichen Zuordnung in Datenfelder der übertragenen Verkehrsmeldungen eingefügt werden wie im Anspruch 4 gekennzeichnet. Vorzugsweise dem ersten Feld eines Datenblocks ist der TMC-Code zugeordnet. In weiteren Feldern sind die für die Verkehrsmeldung notwendigen Informationen beziehungsweise deren Ersetzungswörter, denen in einem weiteren Speicher im Navigationssystem die eigentlichen Verkehrsmeldungen zugeordnetwerden, enthalten. Diese Informationen sind z. B. die in der dem Fachmann bekannten TMC-Tabelle beschriebenen Informationen bezüglich "Location Type, Sub-Type, Road Number, Road-Name, Negative Offset, Positive Offset, First Name, Second Name, Linear Reference und dergleichen". Weiterhin werden in die Datensätze Felder eingefügt, die den späteren Sortierkriterien in der Filtereinrichtung entsprechen. Derartige Kriterien sind unter anderem Kennzeichen für das Element einer defmierten Masche bzw. eines Planquadrats der digitalen Karte und/oder ein zeitliches Kriterium für die Verkehrsmeldung.

Alternativ können die Datenblöcke insgesamt mit Daten bezüglich eines Sortierkriteriums versehen sein, um die TMC-Tabelle in mehrere Blöcke zu unterteilen wie im Anspruch 5 angegeben. Dabei entspricht ein Datenblock z. B. einer Masche bzw. einem Planquadrat der digitalen Karte. Somit kann aus der Gesamtmenge der im TMC-Speicher gespeicherten Verkehrsmeldungen diejenige extrahiert werden, die zu dem Kartenausschnitt, der aktuell im Arbeitsspeicher abgespeichert ist, zugehörig ist.

### Kurzbeschreibung der Zeichnungen

Eine Ausführungsform der Erfindung wird nachstehend anhand der Zeichnungen näher erläutert. Es zeigen:
- Fig. 1:: eine schematische Darstellung eines Datenblocks und
- Fig. 2:: mehrere Datensätze.

### Bester Weg zur Ausführung der Erfindung

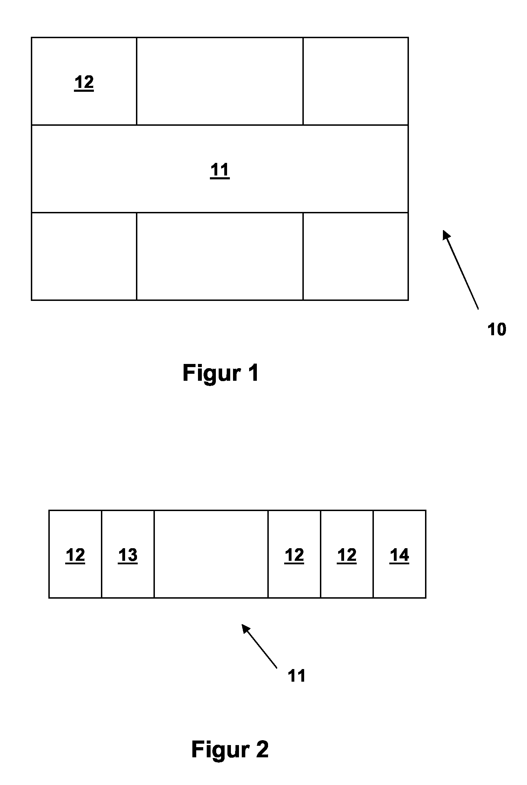

Aus der schematischen Darstellung in Figur 1 ist ein Datenblock 10 ersichtlich, der aus mehreren Datensätzen 11, die hier jeweils als Zeile angedeutet sind, zusammengesetzt ist. Dabei umfasst jeder Datensatz 11 wieder mehrere Datenfelder 12, die in einer Zeile nebeneinander angeordnet sind. Vorzugsweise wird das erste Feld 12 eines Datensatzes 11 mit dem dem Fachmann bekannten TMC-Code versehen. In den weiteren Feldern 12 sind die Informationen der Verkehrsmeldung enthalten bzw. deren Ersetzungswerte wie in die EP 0 756 260 A1 offenbart. Diese Daten können unter anderem die "Location Type, Sub-Type, Road Number, Road Name, Negative Offset, Positive Offset, First Name, Second Name, Linear Refernce" entsprechend der TMC-Tabelle sein.

Zusätzlich wird wie in Figur 2 dargestellt jedem Datensatz 11 Daten für ein Sortierkriterium 13 zugeordnet, um die durch jeden Datensatz 11 wiedergegebene Verkehrsmeldung einem räumlichen Gebiet zuzuordnen. Dies erfolgt insbesondere im zweiten Feld 12 eines Datensatzes 11.

Die Umsetzung der empfangenen TMC-Locationnummer in die Information-Location-Type, Sub-Type, Road-Number, Road-Name etc. erfolgt derart, dass durch Vergleich der empfangenen TMC-Locationnummer mit den entsprechenden Datenfeldern 12 der Datensätze 11 der TMC-Datenblöcke 10 im Arbeitsspeicher des Navigationssystems ein übereinstimmendes Datenfeld gesucht wird. Der dazugehörende Datensatz 11 liefert demzufolge die gesuchte Information für die Übersetzung. Damit der Vergleich nicht unnötig viel Rechenzeit in Anspruch nimmt, kann es hilfreich sein, die Länge der Datensätze 11 durch Füllzeichen 14 auf eine konstante Länge abzugleichen. In gleicher Weise kann auch die Größe der Datenblöcke 10 angeglichen werden. Bevorzugt sind die Felder mit TMC-Locations in einem Datenblock 12 nach definierten Sortierkriterien geordnet, um es einer Filtereinrichtung im Navigationssystem zu ermöglichen, die zu dem momentan befahrenen Gebiet gehörigen Verkehrsmeldungen aus allen empfangenen Verkehrsmeldungen herauszufiltern und einem entsprechend klein gehaltenen Arbeitsspeicher des Navigationssystems zur Berücksichtigung bei der Navigationszielführung zuzuleiten.

## Patentansprüche

1. Navigationssystem mit einem Arbeitsspeicher zum Einlesen von Daten des momentan befahrenen Gebiets aus einem Datenspeicher und mit einem Empfänger zum Empfang von Verkehrsmeldungen wobei die Verkehrsmeldungen in einem Speicher speicherbar sind und zur Berücksichtigung bei der Navigationszielführung in den Arbeitsspeicher einlesbar sind, **dadurch gekennzeichnet, dass** dem Speicher für Verkehrsmeldungen eine Filtereinrichtung zur Ermittlung derjenigen Verkehrsmeldungen für das momentan befahrene Gebiet anhand eines den Verkehrsmeldungen hinzugefügten Sortierkriteriums (13) zugeordnet ist.

2. Navigationssystem nach Anspruch 1, **dadurch gekennzeichnet, dass** der Speicher für Verkehrsmeldungen ein TMC-Speicher ist.

3. Verfahren zum Übertragen von Verkehrsmeldungen in Datenblöcken (10), die aus Datensätzen (11) zusammengesetzt sind, wobei die Datensätze (11) wiederum Datenfelder (12) enthalten, **dadurch gekennzeichnet, dass** den Verkehrsmeldungen ein Sortierkriterium (13) zur räumlichen Zuordnung der Verkehrsmeldung zu einem Gebiet hinzugefügt wird.

4. Verfahren nach Anspruch 3, **dadurch gekennzeichnet, dass** die Daten in den Datensätzen (11) als Datenfelder (12) eingefügt werden.

5. Verfahren nach Anspruch 3, **dadurch gekennzeichnet, dass** die Daten jeweils den Datenblöcken (10) zugeordnet werden.
